(19) Europäisches Patentamt / European Patent Office / Office européen des brevets

(11) **EP 3 515 591 B1**

(12) **EUROPEAN PATENT SPECIFICATION**

(45) Date of publication and mention
of the grant of the patent:
**06.09.2023 Bulletin 2023/36**

(21) Application number: **17785045.0**

(22) Date of filing: **26.09.2017**

(51) International Patent Classification (IPC):
**B01J 35/00** (2006.01)    **B01J 21/08** (2006.01)
**B01J 23/745** (2006.01)    **B01J 35/10** (2006.01)
**B01D 53/86** (2006.01)

(52) Cooperative Patent Classification (CPC):
**B01J 23/745; B01D 53/8612; B01J 21/08;**
**B01J 35/0006; B01J 35/1042; B01J 35/1047;**
B01D 2251/102; B01D 2255/2047;
B01D 2255/20723; B01D 2255/2073;
B01D 2255/20738; B01D 2255/20746;
B01D 2255/20761; B01J 2208/025

(86) International application number:
**PCT/NL2017/050644**

(87) International publication number:
**WO 2018/056828 (29.03.2018 Gazette 2018/13)**

(54) **IMPROVED CATALYST FOR THE SELECTIVE OXIDATION OF HYDROGEN SULFIDE**

VERBESSERTER KATALYSATOR ZUR SELEKTIVEN OXIDATION VON
SCHWEFELWASSERSTOFF

CATALYSEUR AMÉLIORÉ POUR L'OXYDATION SÉLECTIVE DE SULFURE D'HYDROGÈNE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **26.09.2016 NL 2017533**

(43) Date of publication of application:
**31.07.2019 Bulletin 2019/31**

(73) Proprietor: **Worley Nederland B.V.**
**2595 AN 's-Gravenhage (NL)**

(72) Inventors:
• **VAN WARNERS, Anne**
**2595 AN ' s-Gravenhage (NL)**
• **ROELOFS, Tobias**
**2595 AN ' s-Gravenhage (NL)**

(74) Representative: **V.O.**
**P.O. Box 87930**
**2508 DH Den Haag (NL)**

(56) References cited:
EP-A1- 1 355 720    EP-A1- 1 442 781
WO-A1-2016/070805    US-A1- 2012 251 436
US-B1- 6 652 827    US-B1- 6 800 261

• Elmo Nasato: "NEW CATALYST IMPROVES
SULFUR RECOVERY AT CANADIAN PLANT - Oil
& Gas Journal", oil and gas journal, 28 February
1994 (1994-02-28), XP055378502, Retrieved from
the Internet:
URL:http://www.ogj.com/articles/print/volu
me-92/issue-9/in-this-issue/gas-processing
/new-catalyst-improves-sulfur-recovery-at-
canadian-plant.html [retrieved on 2017-06-02]
• WEI-BIN SU ET AL: "Impact of Iron Deposition on
Pd/[delta]-Al 2 O 3 in Selective Hydrogenation of
Pyrolysis Gasoline", INDUSTRIAL &
ENGINEERING CHEMISTRY RESEARCH., vol. 39,
no. 11, 1 November 2000 (2000-11-01), pages
4063-4069, XP055435519, US ISSN: 0888-5885,
DOI: 10.1021/ie000292c

**Description**

The invention is in the field of selective oxidation of sulfur-containing compounds, in particular of hydrogen sulfide. The invention is in particular directed to processes and apparatuses suitable for oxidizing hydrogen sulfide entrained in tail gas streams of a sulfur recovery unit, such as a Claus plant.

Sulfur recovery units are employed to remove sulfur-containing compounds, in particular hydrogen sulfide ($H_2S$), from acid gas streams such as resulting from treatment of natural gas and to produce elemental sulfur. For gas streams comprising high amounts of hydrogen sulfide (*e.g.* 10 vol% or more), the Claus process is the most common desulfurization process. The main reaction in the Claus process is:

$$2\ H_2S + SO_2 \leftrightarrow 3/n\ S_n + 2\ H_2O \qquad (1)$$

A first step in this process comprises the high temperature oxidation of the $H_2S$ with oxygen from air to the stoichiometric required amount of $SO_2$. This combustion of $H_2S$ has the added benefit of also converting contaminants present in the feed. Downstream of this thermal stage, reactors carry out the Claus reaction making use of ceramic catalysts such as alumina and titania. The conversion of $H_2S$ in the Claus process is not complete however, as the Claus reaction is an equilibrium reaction, and tail gas treatment processes are required to reduce the amount of $H_2S$ in the tail gas of the Claus process before the tail gas can be discharged into the atmosphere.

Known methods to treat the tail gas of sulfur recovery units include the low-temperature Claus method, the reduction-absorption method and the selective oxidation method. The selective oxidation method is particularly suitable for the tail gas treatments since, in contrast to the Claus process, the reaction is thermodynamically complete meaning that a theoretically full conversion of $H_2S$ to elemental sulfur is possible.

An example of an industrial process which employs the selective oxidation of $H_2S$ is the Superclaus® process. In this process however, $SO_2$ (which may also be present in the Claus process tail gas) is not converted in the selective oxidation reaction. Accordingly, to further improve the treatment of tail gas, a hydrogenation of $SO_2$ upstream of the reactor where the selective oxidation of $H_2S$ takes place can be carried out. Such a process makes use of the hydrogenation reaction of $SO_2$ with hydrogen to form $H_2S$. Typical catalyst bed configurations in a reactor system for thus a process comprise a top layer of Claus catalyst (typically alumina) followed by a second layer being the hydrogenation catalyst (typically sulfided cobalt molybdenum oxide). An example of an industrial process making use of such a reactor system and process configuration is the Euroclaus® process as described in EP1442781. The formed $H_2S$ is then converted in the downstream selective oxidation reactor to elemental sulfur and water. Also sulfided iron oxide on silica is described in one of the examples.

The selective oxidation of $H_2S$ with oxygen over a catalyst to form elemental sulfur and water is reviewed by Zhang *et al.* (*ACS Catalysis* 2015, 5, 1053-1067). Moreover, the selective oxidation process and particularly suitable catalysts therefore are described in EP0409353 and EP0242920, which are incorporated as reference herein in their entirety. From this work it has become known that supported metal oxides have preference in industrial use due to their high performance and robustness under process conditions. The catalyst consists out of catalytically active metal oxide which is distributed on the surface of the support material particles.

The selective oxidation of $H_2S$ by oxygen to elemental sulfur, as carried out in a fixed bed reactor, is believed to proceed according the following reaction:

$$2\ H_2S + O_2 \rightarrow 2\ H_2O + \tfrac{1}{4}\ S_8 \qquad (2)$$

The selective oxidation to form elemental sulfur may be adversely affected by the occurrence of one or more of the following side reactions:

$$\text{Over oxidation of } H_2S\text{: } 2\ H_2S + 3\ O_2 \rightarrow 2\ H_2O + 2\ SO_2 \qquad (3)$$

$$\text{Oxidation of Ss: } 1/8\ S_8 + O_2 \rightarrow 2H_2O + SO_2 \qquad (4)$$

Nasato et al. (Oil & Gas Journal, 1994, 45-48) describe a catalytic system by loading the reactor with alpha-alumina ($\alpha$-Al) based and silica (Si) based catalysts in a layered manner. This allowed the reduction of the inlet temperature of the catalyst bed and resulted in a higher elemental sulfur yield.

The present inventors surprisingly found that by reducing the metal oxide loading of the catalyst particles that catalyze the selective oxidation, a higher selectivity towards the formation of elemental sulfur from $H_2S$ can be obtained. However, a reduced metal oxide loading generally results in a lower catalyst activity at an equal space velocity (*e.g.* gas hourly space velocity, GHSV, which is the volumetric flow rate of gas divided by volume of catalyst bed/layer) and thus in a lower yield of elemental sulfur. Accordingly, reducing the metal oxide loading must generally be counterbalanced with an increase catalyst volume resulting in increased process costs and for instance a different design of the process plant. Alternatively, the temperature of the catalyst bed can be increased to enhance the reaction rate. A higher catalyst bed temperature however also promotes formation of $SO_2$ via reactions (3) and/or (4) as indicated herein-above. This is undesirable.

The present inventors surprisingly found that by providing a layered fixed catalyst bed, wherein each layer comprises catalyst particles having a different metal oxide loading, the advantage of the higher selectivity could be provided without having to resort to a lower space velocity.

Since the catalyst bed is a fixed bed, layering can be carried out by at least partially filling the oxidation reactor with the first catalyst particles first, following by loading the second catalyst particles on top of the first catalyst particles (or vise versa).

The gas hourly space velocity, or GHSV, in a selective oxidation catalyst bed using supported metal oxides generally lies in the range of 1,000 - 12,000 $h^{-1}$. The specifically preferred gas hourly space velocity is subject to the choice of the catalyst properties (*e.g.* a higher metal oxide loading can be preferred which allows for the use of a higher gas hourly space velocity).

Accordingly, an aspect of the present invention is directed to a fixed catalyst bed for the selective oxidation of hydrogen sulfide with oxygen, said catalyst bed comprising a first catalyst layer and a second catalyst layer, wherein the first catalyst layer comprises first catalyst particles that comprise a first support material comprising silica and a first metal oxide comprising Fe2O3 , and the second catalyst layer comprises second catalyst particles that comprise a second support material comprising silica and a second metal oxide comprising Fe2O3 , wherein said first catalyst particles have a higher Fe2O3 loading based on the total weight of the first catalyst particles than the Fe2O3 loading of said second catalyst particles based on the total weight of the second catalyst particles, wherein said Fe2O3 loading of the second catalyst particles is less than 3% based on the total weight of said second catalyst particles, wherein said Fe2O3 loading of the first catalyst particles is in the range of 5-10% based on the total weight of the first catalyst particles, and wherein the volume of the first catalyst layer is 15-50 vol% of the total catalyst bed volume and the volume of the second catalyst layer is 50-85 vol% of the total catalyst bed volume. It may be appreciated that the metal oxide and the support material are chemically different materials.

For sake of clarity and conciseness it is noted that during the application of the catalyst bed in the selective oxidation reaction, the chemical nature of the metal oxide may temporarily or permanently be altered, without the loss of catalytic activity - as is commonly known for the present catalytic particles. For instance, the metal oxide may at least partially be converted into a metal sulfate and/or metal sulfite. The metal oxide described herein is meant to include these catalytically species as well. In such case, the metal oxide loaded can be corrected for the different weights of the metal sulfate and/or sulfite species with respect to the metal oxide species as the metal oxide loading is expressed at the weight of the metal oxide based on the total weight of the catalyst particle.

A further aspect of the present invention is a process for the selective oxidation of hydrogen sulfide, comprising passing a gas stream comprising hydrogen sulfide over the fixed catalyst bed, wherein the gas stream first contacts the first catalyst layers and subsequently contacts the second catalyst layer such that the hydrogen sulfide is oxidized to form elemental sulfur, wherein the inlet temperature of the catalyst bed is maintained above 150 °C, the gas stream comprises between 0.1 to 2.5 vol% hydrogen sulfide, the gas stream further comprises oxygen and the molar ratio of oxygen to hydrogen sulfide is maintained at 0.5 to 1.5 at the inlet of the catalyst bed, the gas hourly space velocity of the gas stream in the catalyst bed is between 1000 - 12.000 $h^{-1}$, the temperature of the catalyst bed is between 150 - 300°C. The gas stream preferably comprises between 0.5 and 1.5% hydrogen sulfide by volume.

The present invention results in an excellent selectivity towards and yield of elemental sulfur in the selective oxidation process. The yield of elemental sulfur is herein expressed as the degree of elemental sulfur production and is equal to the degree of $H_2S$ conversion corrected for the formation of $SO_2$. Accordingly, the yield can be defined as

$$yield = \frac{[H_2S_{in}] - [H_2S_{out}] + [SO_{2,in}] - [SO_{2,out}]}{[H_2S_{in}]} \times 100\% \qquad (5)$$

The selectivity of the selective oxidation process is herein expressed as the fraction of converted hydrogen sulfide that is converted to elemental sulfur. Accordingly, the selectivity can be defined as

$$selectivity = \frac{[H_2S_{in}] - [H_2S_{out}] + [SO_{2,in}] - [SO_{2,out}]}{[H_2S_{in}] - [H_2S_{out}]}$$
$$\times 100\% \qquad (6)$$

The activity of the selective oxidation process is herein expressed as the degree of hydrogen sulfide that is converted. Accordingly, the activity can be defined as

$$activity = \frac{[H_2S_{in}] - [H_2S_{out}]}{[H_2S_{in}]} \times 100\% \qquad (7)$$

Without wishing to be bound by theory, the present inventors believe that an improved sulfur yield can be obtained for each catalyst layer due to the exothermic nature of the selective oxidation reaction of hydrogen sulfide. Since the present selective oxidation of hydrogen sulfide is typically carried out in an adiabatic reactor and the oxidation reaction is exothermic, the temperature increases when the gas stream contacts the catalyst bed where the reaction takes place. The temperatures further increases when the gas stream passes through the catalyst bed from one layer to the next layer. The inlet temperature of the catalyst bed is typically maintained above 150 °C, which generally results in a temperature of the catalyst bed up to between 160 and 300 °C.

In general, the yield of the selective oxidation is optimum at a certain temperature. At lower temperature, the catalyst activity decreases and at higher temperature, one or more of the above-described side reactions may become more pronounced (*i.e.* the selectivity decreases). Thus, in case the metal oxide loading remains constant throughout the catalyst bed (as is the case in conventional catalyst beds), the increasing temperature results in an increasingly lower local selectivity and elemental sulfur yield. The present inventors have solved this problem by providing a multilayered catalyst system wherein preferably the metal oxide loading of each layer substantially corresponds to the optimum local temperature such that a substantially optimal local yield of elemental sulfur and thus a substantially optimal overall yield is obtained.

Although an improved yield is already obtained by providing two catalyst layers in the catalyst bed, it may be preferred that the catalyst bed of the present invention comprises one or more further (*i.e.* additional) catalyst layers, each catalyst layer comprising catalyst particles. In this particular embodiment, the metal oxide loading of the catalyst particles of each catalyst layer is lower than of the catalyst particles of the preceding catalyst layer such that the metal oxide loading of the catalyst particles decreases over the layers of the catalyst bed. If the layers are sufficiently thin, the metal oxide loading of the catalyst particles may decrease gradually over the catalyst bed.

The temperature of the catalyst may be influenced by the amount of oxygen that is used for the oxidation of the hydrogen sulfide. Preferably, the gas stream entering the reactor contacting the first layer of the catalyst bed further comprises oxygen while maintaining a molar ratio of oxygen to hydrogen sulfide of 0.5 to 1.5.

In general, any known catalyst for the selective oxidation of hydrogen sulfide may suffer from the side reactions as discussed above. Accordingly, the present invention may be applied to the selective oxidation of $H_2S$, irrespective of the type of catalyst used. Particularly preferred catalyst beds and layers are those comprising active materials such as carbon and/or metal-oxide. Zhang et al. (ACS Catalysis 2015, 5, 1053-1067) describe a number of catalysts that are applicable in the selective oxidation and may thus also be applied for the present invention.

The catalysts described in EP0409353 and EP0242920 comprise iron compounds (*e.g.* iron oxide) or a mixture of iron compounds with other metal species as active material and these catalysts are most preferred. The catalyst further comprises a carrier material comprising silica.

The different catalyst layers in the catalyst bed may each be based on different or on the same metal oxide. Preferably the first and the second metal oxide are the same metal oxide. It is further preferred that the first and/or second metal oxide comprise iron oxide.

The metal oxide loading of a catalyst particle is expressed as the weight of the metal oxide based on the total weight of the catalyst particle. The first catalyst particles have a metal oxide loading of 5-10% by weight based on the total weight of the first catalyst particles. The metal oxide loading of the catalyst particles can be determined with conventional analytical techniques such as elemental analyses or temperature programmed reduction (TPR) as described in EP0242920. It may be appreciated that as a result of a sintering treatment for the preparation of the catalyst particles, or from a different method of preparation, a portion of the metal oxide may become encapsulated within the support material, for example, when narrow pores are sealed during the sintering treatment. The difference between this encapsulated or embedded metal oxide and metal oxide present on the carrier, however, can be readily determined by means of temperature programmed reduction. Details of this measuring technique are described in N.W. Hurst, S.J. Gentry, A. Jones and B.D.McNicol Catal.Rev.Sci.Eng 24(2), 233-309 (1982). The amount of metal oxide present in the catalyst particles and accessible to gases can thus be determined.

Said second catalyst particles have a metal oxide loading of less than 3% by weight based on the total weight of the second catalyst particles.

The catalyst particles with the desired metal oxide loading can be obtained by standard preparation procedures such as impregnation (*e.g.* incipient wetness impregnation) of the support material.

The formation of $SO_2$ is undesirable and the side reactions are preferably minimized to maximize the yield of obtained elemental sulfur. Typical support materials are therefore inert, *i.e.* having no substantial activity towards the Claus reaction (1) and the oxidation reactions numbered 2-4 herein-above. See also EP409353 for suitable inert support materials. Inert material can be used in catalyst beds for the selective oxidation of $H_2S$ to promote the heat capacity of the entire bed. This reduces temperature variations during operating conditions. The inert properties of the material can be obtained via a low surface area of the particle of that material or via intrinsic material properties. However, a low surface area will also result in a poor activity once loaded with metal oxides (*i.e.* the active catalyst material) and large volumes of catalyst would be required. It is therefore preferred to use materials which have little or no activity towards the Claus reaction and selective oxidation reaction.

Particularly good results can be obtained when the first support material and the second support material comprise silica. When activity for the Claus reaction is sufficiently high *e.g.* in the presence of a catalyst, the reverse Claus reaction will also occur generating $H_2S$ and $SO_2$ from sulfur and water. This reduces the overall selectivity. Hence support materials are preferably selected based on this property.

The inlet temperature of the catalyst bed is preferably maintained as low as possible since heating the inlet requires energy. It is further preferred that the inlet temperature does not exceed 240 °C, which is the temperature that is typically used in Claus plants. Higher temperatures than 240 °C would require additional energy and equipment as the steam reheaters that are preferably employed in Claus plants would no longer suffice.

The layers of the catalyst bed may further comprise inert particles which are typically based on the same support material as the catalyst particles in the catalyst bed. Thus, particularly suitable inert particles are particles that essentially consist of $\alpha$-alumina, silica, silicon carbide or activated carbon. Interestingly, increasing the ratio inert particles versus catalytic particles typically decreases the activity of the catalyst bed, but does not result in a higher selectivity of the selective oxidation reaction. This illustrates the unpredictable nature of the selective oxidation reaction and the surprising element of the present invention.

Without wishing to be bound by theory, the present inventors believe that the lower activity and the coupled higher selectivity as a result of a lower metal oxide loading, may be connected to certain intraparticle transportation effects within the catalyst particles. The present invention was found to give particular good results when the first catalyst particles have a pore volume of 0.8-1.2 $mm^3/g$, preferably about 1 $mm^3/g$ and the second catalyst particles have a pore volume of more than 1.2 $mm^3/g$ as measured by mercury intrusion techniques. These pore volumes are particularly preferred for catalyst particles based on iron oxide as the metal oxide and silica as the carrier material. These pore volumes are particularly suitable for maintaining good performance of the catalyst particle as well as maintaining good mechanical integrity of the catalyst particle, thereby limiting unnecessary crushing of particles and an increased pressure drop over the catalyst bed.

Aspects such as particle size distribution of the catalyst particles, average particle size of the catalyst particles and interaction of the metal oxide with the support material can possibly influence the selectivity of the reaction. These aspects may change the intrinsic properties of the catalyst particle.

Another parameter that may be advantageously used to improve the elemental sulfur yield is the volumetric ratio of the different catalyst layers within the catalyst bed. As described herein-above, it is preferred that the metal oxide loading of each layer substantially matches the local temperature. The temperature of the gas stream may not increase linear throughout the catalyst bed and/or the difference in metal oxide loading may not be linear from one layer to the next layer. The volume of the first catalyst layer is 15-50% by volume, preferably 20-30% by volume of the total catalyst bed volume.

The volume of the second catalyst layer is 50-85% by volume, preferably 70-80% by volume of the total catalyst bed volume.

The catalyst bed of the present invention provides particular good results when it is provided in an adiabatic reactor. However, it may in principle be advantageously used in any reactor that is isolated such that a temperature profile over the catalyst bed is obtained during the selective oxidation process (*i.e.* the reaction temperature increases in the direction of gas stream flow over the catalyst bed).

The present invention can be illustrated by the following examples.

**Example 1 - single layer catalyst bed**

An inlet gas stream comprising 1.0 vol% $H_2S$, 0.07 vol% $SO_2$, 30 vol% $H_2O$, balance $N_2$ to 100 vol%, together with oxygen in a molar ratio of 2:1 oxygen to $H_2S$, was passed over a single-layered catalyst bed comprising 50 vol% of 5 wt% iron oxide ($Fe_2O_3$) on silica catalyst blended with 50 vol% of inert alumina located in a quartz semi-adiabatic laboratory fixed bed reactor. A space velocity of 2000 $h^{-1}$ was used.

The outlet stream was analyzed via a gas chromatographer to determine the selectivity and yield of sulfur. The results are provided in Table 1.

**Table 1**

| Inlet Temperature (°C) | Selectivity (%) | Yield of Sulfur (%) |
|---|---|---|
| 220 | 96.67 | 84.51 |
| 225 | 96.77 | 86.88 |
| 230 | 96.62 | 93.10 |
| 235 | 95.96 | 94.53 |
| 240 | 95.95 | 95.45 |
| **245** | **96.04** | **95.51** |
| 250 | 94.87 | 94.71 |
| 260 | 92.85 | 92.72 |
| 270 | 88.57 | 88.40 |

**Example 2 - low loading of metal oxide**

Example 1 was repeated, but the $H_2S$ was passed over a single-layer catalyst bed comprising 50 vol% of 2 wt% iron oxide ($Fe_2O_3$) on silica catalyst blended with 50 vol% of inert alumina. The results are provided in Table 2.

**Table 2**

| Inlet Temperature (°C) | Selectivity (%) | Yield (%) |
|---|---|---|
| 225 | 97.65 | 64.47 |
| 230 | 97.30 | 78.46 |
| 235 | 97.68 | 87.79 |
| 240 | 97.26 | 93.89 |
| **250** | **96.54** | **95.83** |
| 260 | 95.81 | 95.60 |
| 270 | 93.91 | 93.77 |

It is clear from Table 2 compared to Table 1 that a higher average selectivity is obtained by applying a lower iron oxide loading. This translates into a high yield towards elemental sulfur. A lower loading of metal oxide also reduces the activity of the catalyst bed as illustrated by the inlet temperature required to reach the maximum yield which amounts to 250°C. This inlet temperature is too high for direct application as a single layer in industrial applications using a steam reheater.

**Example 3 - effect of catalyst dilution with inert material**

Example 1 was repeated, but the $H_2S$ was passed over a single-layer catalyst bed comprising 100 vol% of 5 wt% iron oxide ($Fe_2O_3$) on silica catalyst (thus no inert material was present). The results are provided in Table 3.

**Table 3**

| Inlet Temperature (°C) | Selectivity (%) |
|---|---|
| 220 | 96.86 |
| 225 | 96.34 |
| 230 | 96.28 |
| 240 | 95.74 |
| 250 | 94.28 |

(continued)

| Inlet Temperature (°C) | Selectivity (%) |
|---|---|
| 260 | 91.83 |
| 270 | 85.95 |

Comparing the results in Table 3 and Table 1 indicates no difference in selectivity between a 5wt% iron oxide ($Fe_2O_3$) on silica catalyst with or without inert material. Merely diluting the catalyst bed via addition of inert material, thereby reducing the iron oxide loading throughout the catalyst bed, does not provide a higher selectivity as is illustrated by comparing Table 1 and 3. This observation supports the need to reduce the metal oxide loading on the actual catalyst particles.

**Example 4** - **effect of layered catalyst bed**

An inlet stream comprising 1.0 vol% $H_2S$, 0.07 vol% $SO_2$, 30 vol% $H_2O$, balance $N_2$ together with oxygen in a molar ratio of 2:1 oxygen to $H_2S$ was passed over a bi-layered catalyst bed comprising 25 vol% of a first (top) layer of 5 wt% iron oxide ($Fe_2O_3$) on silica catalyst and 75 vol% of a second (bottom) layer of 2 wt% iron oxide ($Fe_2O_3$) on silica catalyst located in a quartz semi-adiabatic laboratory fixed bed reactor. A space velocity of 2000 h$^{-1}$ was set. The outlet stream was analyzed via a gas chromatograph to determine the conversion, selectivity and yield of sulfur. The results are provided in Table 4.

**Table 4**

| Inlet Temperature (°C) | Selectivity | Yield of Sulfur |
|---|---|---|
| 195 | 97.79 | 45.73 |
| 200 | 97.94 | 59.29 |
| 210 | 96.79 | 86.17 |
| 220 | 96.80 | 95.26 |
| **225** | **96.14** | **95.90** |
| 230 | 96.06 | 96.26 |
| 235 | 96.12 | 96.03 |
| 240 | 95.85 | 95.75 |
| 245 | 93.63 | 93.54 |
| 250 | 92.47 | 92.40 |
| 260 | 88.56 | 88.46 |
| 270 | 80.28 | 80.15 |

Comparing the results of Table 4 with Table 1 shows that a higher yield is obtained with the multilayer at the optimum temperature, which is 225 °C for Table 4 and 245 °C for Table 1.

**Claims**

1. Fixed catalyst bed for the selective oxidation of hydrogen sulfide with oxygen, said catalyst bed comprising a first catalyst layer and a second catalyst layer, wherein the first catalyst layer comprises first catalyst particles that comprise a first support material comprising silica and a first metal oxide comprising $Fe_2O_3$, and the second catalyst layer comprises second catalyst particles that comprise a second support material comprising silica and a second metal oxide comprising $Fe_2O_3$, wherein said first catalyst particles have a higher $Fe_2O_3$ loading based on the total weight of the first catalyst particles than the $Fe_2O_3$ loading of said second catalyst particles based on the total weight of the second catalyst particles, wherein said $Fe_2O_3$ loading of the second catalyst particles is less than 3% based on the total weight of said second catalyst particles, wherein said $Fe_2O_3$ loading of the first catalyst particles is in the range of 5-10% based on the total weight of the first catalyst particles, and wherein the volume of the first catalyst layer is 15-50 vol% of the total catalyst bed volume and the volume of the second catalyst layer is 50-85 vol% of the total catalyst bed volume.

2. Catalyst bed according to any of the previous claims, wherein the volume of the first catalyst layer is 20-30 vol% of the total catalyst bed volume.

3. Catalyst bed according to any of the previous claims, wherein the volume of the second catalyst layer is 70-80 vol% of the total catalyst bed volume.

4. Catalyst bed according to any of the previous claims, wherein the first catalyst layer and/or the second catalyst layer further comprise inert particles that consist of alpha-alumina, silica, silicon carbide or activated carbon.

5. Process for the selective oxidation of hydrogen sulfide, comprising passing a gas stream comprising hydrogen sulfide together with oxygen over the fixed catalyst bed in accordance with any of claim 1-4, wherein the gas stream first contacts the first catalyst layer and subsequently contacts the second catalyst layer such that the hydrogen sulfide is oxidized to form elemental sulfur, wherein the inlet temperature of the catalyst bed is maintained above 150 °C, the gas stream comprises between 0.1 to 2.5 vol% hydrogen sulfide, the gas stream further comprises oxygen and the molar ratio of oxygen to hydrogen sulfide is maintained at 0.5 to 1.5 at the inlet of the catalyst bed, the gas hourly space velocity of the gas stream in the catalyst bed is between 1000 - 12.000 h$^{-1}$, the temperature of the catalyst bed is between 150 - 300°C.

6. Process according to claim 5, wherein the gas stream comprises between 0.5 and 1.5 vol% hydrogen sulfide.

7. Plant for the selective oxidation of hydrogen sulfide comprising the catalyst bed in accordance with any of claim 1-4, said plant being located downstream a sulfur recovery unit, in particular a Claus plant.

**Patentansprüche**

1. Festes Katalysatorbett für die selektive Oxidation von Schwefelwasserstoff mit Sauerstoff, das Katalysatorbett umfassend eine erste Katalysatorschicht und eine zweite Katalysatorschicht, wobei die erste Katalysatorschicht erste Katalysatorpartikel umfasst, die ein erstes Trägermaterial, umfassend Siliciumdioxid, und ein erstes Metalloxid, umfassend $Fe_2O_3$, umfassen, und die zweite Katalysatorschicht zweite Katalysatorpartikel umfasst, die ein zweites Trägermaterial, umfassend Siliciumdioxid, und ein zweites Metalloxid, umfassend $Fe_2O_3$ umfassen, wobei die ersten Katalysatorpartikel eine höhere $Fe_2O_3$-Beladung, basierend auf dem Gesamtgewicht der ersten Katalysatorpartikel haben als die $Fe_2O_3$-Beladung der zweiten Katalysatorpartikel, basierend auf dem Gesamtgewicht der zweiten Katalysatorteilchen, wobei die $Fe_2O_3$-Beladung der zweiten Katalysatorteilchen weniger als 3 % ist, basierend auf dem Gesamtgewicht der zweiten Katalysatorteilchen,, wobei die $Fe_2O_3$-Beladung der ersten Katalysatorteilchen in dem Bereich von 5-10 %, basierend auf dem Gesamtgewicht der ersten Katalysatorteilchen, ist, und das Volumen der ersten Katalysatorschicht 15-50 Vol.-% des gesamten Katalysatorbettvolumens ist und das Volumen der zweiten Katalysatorschicht 50-85 Vol.-% des gesamten Katalysatorbettvolumens ist.

2. Katalysatorbett nach einem der vorhergehenden Ansprüche, wobei das Volumen der ersten Katalysatorschicht 20-30 Vol.-% des gesamten Katalysatorbettvolumens ist.

3. Katalysatorbett nach einem der vorhergehenden Ansprüche, wobei das Volumen der zweiten Katalysatorschicht 70-80 Vol.-% des gesamten Katalysatorbettvolumens ist.

4. Katalysatorbett nach einem der vorhergehenden Ansprüche, wobei die erste Katalysatorschicht und/oder die zweite Katalysatorschicht ferner inerte Partikel umfassen, die aus Alpha-Aluminiumoxid, Siliziumoxid, Siliziumkarbid oder Aktivkohle bestehen.

5. Verfahren zur selektiven Oxidation von Schwefelwasserstoff, umfassend Leiten eines Gasstroms, umfassend Schwefelwasserstoff zusammen mit Sauerstoff, über das feste Katalysatorbett gemäß einem der Ansprüche 1 - 4, wobei der Gasstrom zunächst die erste Katalysatorschicht kontaktiert und anschließend die zweite Katalysatorschicht kontaktiert, sodass der Schwefelwasserstoff oxidiert wird, um elementaren Schwefel zu bilden, wobei die Einlasstemperatur des Katalysatorbetts über 150 °C gehalten wird, der Gasstrom zwischen 0,1 und 2,5 Vol.-%

Schwefelwasserstoff umfasst, der Gasstrom ferner Sauerstoff umfasst und das Molverhältnis von Sauerstoff zu Schwefelwasserstoff auf 0,5 bis 1,5 am Einlass des Katalysatorbetts gehalten wird; die stündliche Gasraumgeschwindigkeit des Gasstroms in dem Katalysatorbett zwischen 1000 - 12.000 h$^{-1}$ist, die Temperatur des Katalysatorbetts zwischen 150 - 300 °C ist.

6. Verfahren nach Anspruch 5, wobei der Gasstrom zwischen 0,5 und 1,5 Vol.-% Schwefelwasserstoff umfasst.

7. Anlage zur selektiven Oxidation von Schwefelwasserstoff, umfassend das Katalysatorbett nach einem der Ansprüche 1-4, wobei die Anlage stromabwärts einer Schwefelrückgewinnungsanlage, insbesondere einer Claus-Anlage, angeordnet ist.

**Revendications**

1. Lit catalytique fixe pour l'oxydation sélective du sulfure d'hydrogène par de l'oxygène, ledit lit catalytique comprenant une première couche de catalyseur et une deuxième couche de catalyseur, dans lequel la première couche de catalyseur comprend des premières particules de catalyseur qui comprend un premier matériau de support comprenant de la silice et un premier oxyde métallique comprenant $Fe_2O_3$, et la deuxième couche de catalyseur comprend des deuxièmes particules de catalyseur qui comprend un deuxième matériau de support comprenant de la silice et un oxyde d'un deuxième métal comprenant $Fe_2O_3$, dans lequel lesdites premières particules de catalyseur présentent une charge en $Fe_2O_3$ plus élevée, par rapport au poids total des premières particules de catalyseur, que celle de la charge en $Fe_2O_3$ desdites deuxièmes particules de catalyseur par rapport au poids total des deuxièmes particules de catalyseur, où ladite charge en $Fe_2O_3$ des deuxièmes particules de catalyseur est inférieure à 3% exprimés par rapport au poids total desdites deuxièmes particules de catalyseur, dans lequel ladite charge en $Fe_2O_3$ des premières particules de catalyseur est comprise entre 5 et 10% exprimés par rapport au poids total des premières particules de catalyseur, et dans lequel le volume de la première couche de catalyseur est de 15 à 50vol% du volume total du lit catalytique et le volume de la deuxième couche de catalyseur est de 50 à 85 vol% du volume total du lit catalytique.

2. Lit catalytique selon l'une quelconque des revendications précédentes, dans lequel le volume de la première couche de catalyseur constitue 20 à 30 vol% du volume total du lit catalytique

3. Lit catalytique selon l'une quelconque des revendications précédentes, dans lequel le volume de la deuxième couche de catalyseur constitue 70 à 80 vol% du volume total du lit catalytique.

4. Lit catalytique selon l'une quelconque des revendications précédentes, dans lequel la première couche de catalyseur et/ou la deuxième couche de catalyseur comprennent en outre des particules inertes constituées d'alpha-alumine, de silice, de carbure de silicium ou de charbon actif.

5. Procédé d'oxydation sélective du sulfure d'hydrogène, comprenant le passage d'un flux gazeux comprenant du sulfure d'hydrogène et de l'oxygène sur le lit catalytique fixé conformément à l'une quelconque des revendications 1-4, dans lequel le flux gazeux entre d'abord en contact avec la première couche de catalyseur et entre ensuite en contact avec le deuxième couche de catalyseur de façon telle que le sulfure d'hydrogène est oxydé pour former du soufre élémentaire, dans lequel la température d'entrée du lit catalytique est maintenue au-dessus de 150°C, le flux gazeux comprend entre 0,1 et 2,5 vol% de sulfure d'hydrogène, le flux gazeux comprend en outre de l'oxygène et le rapport molaire oxygène/sulfure d'hydrogène est maintenu entre 0,5 et 1,5 à l'entrée du lit catalytique, la vitesse spatiale horaire du gaz du flux gazeux dans le lit catalytique étant comprise entre 1000 et 12.000 h$^{-1}$, la température du lit catalytique étant comprise entre 150 - 300°C.

6. Procédé selon la revendication 5, dans lequel le flux gazeux comprend de 0,5 à 1,5 vol% de sulfure d'hydrogène.

7. Installation d'oxydation sélective du sulfure d'hydrogène comprenant le lit catalytique selon l'une quelconque des revendications 1-4, ladite installation étant située en aval d'une unité de récupération de soufre, en particulier d'une installation Claus.

## REFERENCES CITED IN THE DESCRIPTION

**Patent documents cited in the description**

- EP 1442781 A
- EP 0409353 A
- EP 0242920 A
- EP 409353 A

**Non-patent literature cited in the description**

- **NASATO et al.** *Oil & Gas Journal,* 1994, 45-48
- **ZHANG et al.** *ACS Catalysis,* 2015, vol. 5, 1053-1067
- **N.W. HURST ; S.J. GENTRY ; A. JONES ; B.D.MC-NICOL.** *Catal.Rev.Sci.Eng,* 1982, vol. 24 (2), 233-309